# EUROPEAN PATENT APPLICATION

(11) **EP 4 618 464 A1**
(43) Date of publication of application: **17.09.2025**
(21) Application number: 23896386.2
(22) Date of filing: 30.10.2023
(51) Int. Cl.: H04L 5/00

(54) **COMMUNICATION METHOD, APPARATUS AND SYSTEM**

(30) Priority: 30.11.2022 CN 202211528418
(71) Applicant: Huawei Technologies Co., Ltd., Shenzhen, Guangdong 518129 (CN)
(72) Inventor: GU, Zhifang, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2023/127936
(87) International publication number: WO 2024/114232

(57) **Abstract**

This application provides a communication method, apparatus, and system, and belongs to the field of communication technologies, to avoid impact on efficiency of multi-station coordinated transmission caused by asynchronous transmission. In the method, after distributing data of a service of a terminal to a second access network device, a first access network device as a control anchor of multi-station coordinated transmission may determine, based on a feedback of the second access network device, that the second access network device has successfully received at least a part of the data, for example, first data. In this case, both the first access network device and the second access network device obtain the same first data, to send the first data to the terminal on a same time domain resource, so as to avoid impact on efficiency of multi-station coordinated transmission caused by asynchronous transmission.

## Description

This application claims priority to Chinese Patent Application No. 202211528418.0, filed with the China National Intellectual Property Administration on November 30, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

In a communication system, a plurality of access network devices may send signals carrying same data to a terminal at a same or close moment, that is, multi-station coordinated transmission. In this case, the terminal may superimpose and combine the received signals, to increase a signal-to-noise ratio of a signal received by the terminal, and improve communication reliability and capacity.

For example, in a multimedia broadcast multicast service (multicast broadcast multimedia service, MBMS) architecture of a 4th generation (4th generation, 4G) mobile communication system, after a broadcast-multicast service center (broadcast-multicast service center, BM-SC) receives data from an application function (application function, AF), the BM-SC, as a control anchor, may duplicate and distribute the data to a plurality of evolved NodeBs (eNodeBs, eNBs) via an MBMS gateway, so that the plurality of eNBs can simultaneously send the data to user equipment (user equipment, UE), thereby implementing multi-station coordinated transmission.

However, as the control anchor, the BM-SC cannot ensure that the plurality of eNBs can simultaneously send the data to the UE. Consequently, efficiency of multi-station coordinated transmission is affected.

### SUMMARY

Embodiments of this application provide a communication method, apparatus, and system, to avoid impact on efficiency of multi-station coordinated transmission caused by asynchronous transmission.

To achieve the foregoing objective, this application uses the following technical solutions.

According to a first aspect, a communication method is provided. The method includes: A first access network device sends data of a service of a terminal to a second access network device, and receives feedback information from the second access network device. The feedback information is used to determine that first data is successfully received by the second access network device, and the first data is at least a part of the data of the service. Then, the first access network device sends the first data to the terminal on a first time domain resource. The first time domain resource is further used by the second access network device to send the first data to the terminal.

It can be learned from the method according to the first aspect that after distributing the data of the service of the terminal to the second access network device, the first access network device as a control anchor of multi-station coordinated transmission may determine, based on a feedback of the second access network device, that the second access network device has successfully received at least a part of the data, for example, the first data. In this case, both the first access network device and the second access network device obtain the same first data, so that the first data can be sent to the terminal on a same time domain resource, to avoid impact on efficiency of multi-station coordinated transmission caused by asynchronous transmission.

In a possible design solution, the feedback information includes a first identifier of the first data and/or a second identifier of second data that is in the data of the service and that is not successfully received by the second access network device, and the second data is different from the first data. The method according to the first aspect may further include: The first access network device determines, based on the first identifier and/or the second identifier, that the first data is successfully received by the second access network device. In other words, when the second access network device feeds back only an identifier of data, the first access network device can also determine data that is successfully received, to reduce overheads of feedback information.

Optionally, the second identifier is a sequence number of the second data, and the sequence number of the second data represents a sending order of the second data. That the first access network device determines, based on the second identifier, that the first data is successfully received by the second access network device includes: The first access network device determines, based on the sequence number of the second data, data sent before the second data. The data sent before the second data is the first data that is successfully received by the second access network device. It may be understood that the first access network device may send data of a service in a specific order. In this way, even if the second access network device feeds back only a sequence number of data that is not successfully received, the first access network device can determine, based on the sending order, data that is successfully received by the second access network device, to further reduce overheads of feedback information and improve communication efficiency.

Optionally, the method according to the first aspect may further include: The first access network device determines, based on the first identifier and/or the second identifier, that the second data is not successfully received by the second access network device; and the first access network device sends the second data to the terminal on a second time domain resource. The second time domain resource is a time domain resource different from the first time domain resource. In other words, when the second access network device does not successfully receive some data, the first access network device needs to adjust the data for independent transmission in a timely manner, to avoid a case in which the terminal cannot successfully receive the data due to different data sent on a same time domain resource.

In a possible design solution, before that the first access network device sends the first data to the terminal on the first time domain resource, the method according to the first aspect may further include: The first access network device determines that a data amount of the first data has reached a data amount threshold, where the data amount threshold is a data amount that triggers the first access network device and the second access network device to send data on a same time domain resource, to avoid an increase in transmission overheads caused by an excessively small amount of data sent at a time; and/or the first access network device determines that duration for which the first access network device stores the first data has reached first threshold duration, where the first threshold duration is duration for which the first data remains valid on the first access network device. In other words, the first access network device needs to send the first data before the first data is invalid, to prevent a service of the terminal from being affected due to invalid data.

In a possible design solution, before that the first access network device sends the first data to the terminal on the first time domain resource, the method according to the first aspect may further include: The first access network device sends first indication information to the terminal, and receives a channel measurement result from the terminal. The first indication information is used to trigger the terminal to measure a channel. The channel is a channel between the first access network device and the terminal and between the second access network device and the terminal. The channel measurement result represents a state of the channel. Correspondingly, that the first access network device sends the first data to the terminal on the first time domain resource includes: The first access network device determines, based on the state of the channel, to send the first data to the terminal on the first time domain resource, to ensure that transmission between the first access network device and the terminal matches the state of the channel, so as to improve communication efficiency.

Optionally, after that the first access network device sends the first data to the terminal on the first time domain resource, the method according to the first aspect may further include: The first access network device sends second indication information to the terminal. The second indication information indicates the terminal to suspend measuring the channel. For example, if the first access network device and the second access network device do not need to send data on a same time domain resource, the first access network device may send the second indication information to the terminal, to avoid unnecessary overheads caused because the terminal continues to perform redundant channel measurement.

Optionally, before that the first access network device sends the first data to the terminal on the first time domain resource, the method according to the first aspect may further include: The first access network device sends third indication information to the second access network device. The third indication information indicates that the second access network device needs to send a reference signal to the terminal, and the reference signal is used by the terminal to measure the channel. In this way, a channel measurement failure caused because the second access network device does not send the reference signal can be avoided.

Further, after that the first access network device sends the first data to the terminal on the first time domain resource, the method according to the first aspect may further include: The first access network device sends fourth indication information to the second access network device. The fourth indication information indicates the second access network device to suspend sending the reference signal. For example, if the first access network device and the second access network device do not need to send data on a same time domain resource, the first access network device may send the fourth indication information to the second access network device, to avoid unnecessary overheads caused because the second access network device continues to send a redundant reference signal.

In a possible design solution, before that the first access network device sends the first data to the terminal on the first time domain resource, the method according to the first aspect may further include: The first access network device sends fifth indication information to the second access network device. The fifth indication information is used to trigger the second access network device and the first access network device to send data on a same time domain resource. In other words, whether the second access network device performs multi-station coordinated transmission may be indicated by the first access network device, to perform multi-station coordinated transmission as required.

Optionally, after that the first access network device sends the first data to the terminal on the first time domain resource, the method according to the first aspect may further include: The first access network device sends sixth indication information to the second access network device. The sixth indication information is used to trigger the second access network device and the first access network device to suspend sending the data on the same time domain resource. For example, if the first access network device and the second access network device do not need to send data on a same time domain resource, the first access network device may send the sixth indication information to the second access network device, to avoid unnecessary overheads caused because the second access network device continues to send redundant data.

In a possible design solution, before that the first access network device sends the data of the service of the terminal to the second access network device, the method according to the first aspect further includes: The first access network device obtains the data of the service, to determine that the data of the service is data that needs to be sent by the first access network device and the second access network device on a same time domain resource. In other words, for data of different services, whether multi-station coordinated transmission is performed may be determined by the first access network device based on a type of the service, to ensure that a service requirement is met.

According to a second aspect, a communication method is provided. The method includes: A second access network device receives first data, and sends feedback information to a first access network device based on the first data. The first data is at least a part of data of a service of a terminal, the data of the service is data sent by the first access network device to the second access network device, and the feedback information is used to determine that the first data is successfully received by the second access network device. In this way, the second access network device sends the first data to the terminal on a first time domain resource. The first time domain resource is further used by the first access network device to send the first data to the terminal.

In a possible design solution, the feedback information may include a first identifier of the first data and/or a second identifier of second data that is in the data of the service and that is not successfully received by the second access network device, and the second data is different from the first data.

Optionally, a sequence number of the first data represents a sending order of the first data. After that the second access network device receives the first data, and before that the second access network device sends the feedback information to the first access network device, the method according to the second aspect may further include: The second access network device determines, based on the sequence number of the first data, that data that is not successfully received within transmission duration since the first data is received is the second data. The transmission duration may be duration allowed for data transmission between the first access network device and the second access network device. If data that should be received at a specific time is still not received within transmission duration since the time, it indicates that the data is not being transmitted, but a packet loss occurs. In other words, the transmission duration is set, so that the second access network device can accurately determine data that is not successfully received because the data is being transmitted and data that is not successfully received because of a packet loss, to avoid incorrect determining.

In a possible design solution, before that the second access network device sends the first data to the terminal on the first time domain resource, the method according to the second aspect may further include: The second access network device determines that a data amount of the first data has reached a data amount threshold, where the data amount threshold is a data amount that triggers the first access network device and the second access network device to send data on a same time domain resource; and/or the second access network device determines that duration for which the second access network device stores the first data has reached second threshold duration, where the second threshold duration is duration for which the first data remains valid on the second access network device.

In a possible design solution, before that the second access network device sends the first data to the terminal on the first time domain resource, the method according to the second aspect may further include: The second access network device receives third indication information from the first access network device, and sends a reference signal based on the third indication information. The third indication information indicates that the second access network device needs to send the reference signal. The reference signal is used by the terminal to measure a channel. The channel is a channel between the first access network device and the terminal and between the second access network device and the terminal.

Optionally, after that the second access network device sends the first data to the terminal on the first time domain resource, the method according to the second aspect may further include: The second access network device receives fourth indication information from the first access network device. The fourth indication information indicates the second access network device to suspend sending the reference signal.

In a possible design solution, before that the second access network device sends the first data to the terminal on the first time domain resource, the method according to the second aspect may further include: The second access network device receives fifth indication information from the first access network device. The fifth indication information is used to trigger the second access network device and the first access network device to send data on a same time domain resource.

Optionally, after that the second access network device sends the first data to the terminal on the first time domain resource, the method according to the second aspect may further include: The second access network device receives sixth indication information from the first access network device. The sixth indication information is used to trigger the second access network device and the first access network device to suspend sending the data on the same time domain resource.

In addition, for other technical effects of the method according to the second aspect, refer to the technical effects of the method according to the first aspect. Details are not described herein again.

According to a third aspect, a communication method is provided. The method includes: A first access network device sends data of a service of a terminal to a second access network device. The second access network device receives first data, and sends feedback information to the first access network device based on the first data. The first access network device receives the feedback information from the second access network device. The feedback information is used to determine that the first data is successfully received by the second access network device, and the first data is at least a part of the data of the service. In this way, the first access network device sends the first data to the terminal on a first time domain resource, and the second access network device sends the first data to the terminal on the first time domain resource.

In a possible design solution, the feedback information includes a first identifier of the first data and/or a second identifier of second data that is in the data of the service and that is not successfully received by the second access network device, and the second data is different from the first data.

Optionally, the method according to the third aspect may further include: The first access network device determines, based on the first identifier and/or the second identifier, that the first data is successfully received by the second access network device.

Further, the second identifier is a sequence number of the second data, and the sequence number of the second data represents a sending order of the second data. That the first access network device determines, based on the second identifier, that the first data is successfully received by the second access network device includes: The first access network device determines, based on the sequence number of the second data, data sent before the second data. The data sent before the second data is the first data that is successfully received by the second access network device.

Further, the method according to the third aspect may further include: The first access network device determines, based on the first identifier and/or the second identifier, that the second data is not successfully received by the second access network device; and the first access network device sends the second data to the terminal on a second time domain resource. The second time domain resource is a time domain resource different from the first time domain resource.

Further, a sequence number of the data of the service represents a sending order of the data of the service. After that the second access network device receives the first data, and before that the second access network device sends the feedback information to the first access network device, the method according to the third aspect may further include: The second access network device determines, based on the sequence number of the data of the service, that data that is not successfully received within transmission duration since the first data is received is the second data.

In a possible design solution, before that the first access network device sends the first data to the terminal on the first time domain resource, the method according to the third aspect may further include: The first access network device determines that a data amount of the first data has reached a data amount threshold, where the data amount threshold is a data amount that triggers the first access network device and the second access network device to send data on a same time domain resource; and/or the first access network device determines that duration for which the first access network device stores the first data has reached first threshold duration, where the first threshold duration is duration for which the first data remains valid on the first access network device.

In a possible design solution, before that the second access network device sends the first data to the terminal on the first time domain resource, the method according to the third aspect may further include: The second access network device determines that a data amount of the first data has reached a data amount threshold, where the data amount threshold is a data amount that triggers the first access network device and the second access network device to send data on a same time domain resource; and/or the second access network device determines that duration for which the second access network device stores the first data has reached second threshold duration, where the second threshold duration is duration for which the first data remains valid on the second access network device.

In a possible design solution, before that the first access network device sends the first data to the terminal on the first time domain resource, the method according to the third aspect may further include: The first access network device sends first indication information to the terminal, and receives a channel measurement result from the terminal. The first indication information is used to trigger the terminal to measure a channel. The channel is a channel between the first access network device and the terminal and between the second access network device and the terminal. The channel measurement result represents a state of the channel. Correspondingly, that the first access network device sends the first data to the terminal on the first time domain resource includes: The first access network device determines, based on the state of the channel, to send the first data to the terminal on the first time domain resource.

Optionally, after that the first access network device sends the first data to the terminal on the first time domain resource, the method according to the third aspect may further include: The first access network device sends second indication information to the terminal. The second indication information indicates the terminal to suspend measuring the channel.

Optionally, before that the first access network device sends the first data to the terminal on the first time domain resource, and the second access network device sends the first data to the terminal on the first time domain resource, the method according to the third aspect may further include: The first access network device sends third indication information to the second access network device. The second access network device receives the third indication information from the first access network device, and sends a reference signal based on the third indication information. The third indication information indicates that the second access network device needs to send a reference signal to the terminal, and the reference signal is used by the terminal to measure the channel.

Further, after that the first access network device sends the first data to the terminal on the first time domain resource, and the second access network device sends the first data to the terminal on the first time domain resource, the method according to the third aspect may further include: The first access network device sends fourth indication information to the second access network device, and the second access network device receives the fourth indication information from the first access network device. The fourth indication information indicates the second access network device to suspend sending the reference signal.

In a possible design solution, before that the first access network device sends the first data to the terminal on the first time domain resource, and the second access network device sends the first data to the terminal on the first time domain resource, the method according to the third aspect may further include: The first access network device sends fifth indication information to the second access network device, and the first access network device sends the fifth indication information to the second access network device. The fifth indication information is used to trigger the second access network device and the first access network device to send data on a same time domain resource.

Optionally, after that the first access network device sends the first data to the terminal on the first time domain resource, and the second access network device sends the first data to the terminal on the first time domain resource, the method according to the third aspect may further include: The first access network device sends sixth indication information to the second access network device, and the second access network device receives the sixth indication information from the first access network device. The sixth indication information is used to trigger the second access network device and the first access network device to suspend sending the data on the same time domain resource.

In a possible design solution, before that the first access network device sends the data of the service of the terminal to the second access network device, the method according to the third aspect further includes: The first access network device obtains the data of the service, to determine that the data of the service is data that needs to be sent by the first access network device and the second access network device on a same time domain resource.

In addition, for technical effects of the method according to the third aspect, refer to the technical effects of the methods according to the first aspect and the second aspect. Details are not described herein again.

According to a fourth aspect, a communication apparatus is provided. The communication apparatus includes modules configured to perform the method according to the first aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus may perform the method according to the first aspect.

It may be understood that the communication apparatus according to the fourth aspect may be a network device, for example, a first access network device, may be a chip (system) or another part or component that may be disposed in a network device, or may be an apparatus including a network device. This is not limited in this application.

In addition, for technical effects of the communication apparatus according to the fourth aspect, refer to the technical effects of the method according to the first aspect. Details are not described herein again.

According to a fifth aspect, a communication apparatus is provided. The communication apparatus includes modules configured to perform the method according to the second aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module, and the storage module stores a program or instructions. When the processing module executes the program or the instructions, the communication apparatus may perform the method according to the second aspect.

It may be understood that the communication apparatus according to the fifth aspect may be a network device, for example, a second access network device, may be a chip (system) or another part or component that may be disposed in a network device, or may be an apparatus including a network device. This is not limited in this application.

In addition, for technical effects of the communication apparatus according to the fifth aspect, refer to the technical effects of the method according to the second aspect. Details are not described herein again.

According to a sixth aspect, a communication apparatus is provided. The communication apparatus includes a processor. The processor is configured to perform the method according to any one of the possible implementations of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design solution, the communication apparatus according to the sixth aspect may further include a memory. The memory and the processor may be integrated together, or may be disposed separately. The memory may be configured to store a computer program and/or data related to the method according to any one of the first aspect or the second aspect.

In embodiments of this application, the communication apparatus according to the sixth aspect may be the network device according to any one of the first aspect or the second aspect, or a chip (system) or another part or component that may be disposed in the network device, or an apparatus including the network device.

In addition, for technical effects of the communication apparatus according to the sixth aspect, refer to the technical effects of the method according to any one of the implementations of the first aspect or the second aspect. Details are not described herein again.

According to a seventh aspect, a communication apparatus is provided. The communication apparatus includes a processor. The processor is coupled to a memory, and the processor is configured to execute a computer program stored in the memory, so that the communication apparatus performs the method according to any one of the possible implementations of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments of this application, the communication apparatus according to the seventh aspect may be the network device according to any one of the first aspect or the second aspect, or a chip (system) or another part or component that may be disposed in the network device, or an apparatus including the network device.

In addition, for technical effects of the communication apparatus according to the seventh aspect, refer to the technical effects of the method according to any one of the implementations of the first aspect or the second aspect. Details are not described herein again.

According to an eighth aspect, a communication apparatus is provided, and includes a processor and a memory. The memory is configured to store a computer program, and when the processor executes the computer program, the communication apparatus is enabled to perform the method according to any one of the implementations of the first aspect or the second aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In embodiments of this application, the communication apparatus according to the eighth aspect may be the network device according to any one of the first aspect or the second aspect, or a chip (system) or another part or component that may be disposed in the network device, or an apparatus including the network device.

In addition, for technical effects of the communication apparatus according to the eighth aspect, refer to the technical effects of the method according to any one of the implementations of the first aspect or the second aspect. Details are not described herein again.

According to a ninth aspect, a chip is provided. The chip includes a processor, and the processor is configured to execute a computer program or instructions stored in a memory, so that the chip performs the method according to any one of the implementations of the first aspect or the second aspect.

In a possible design solution, the chip according to the ninth aspect may further include an input/output interface. The input/output interface may be used for communication of the chip according to the ninth aspect.

In a possible design solution, the chip according to the ninth aspect may further include a memory. The memory and the processor may be integrated together, or may be disposed separately. The memory may be configured to store a computer program and/or data related to the method according to any one of the first aspect or the second aspect.

In addition, for technical effects of the communication apparatus according to the ninth aspect, refer to the technical effects of the method according to any one of the implementations of the first aspect or the second aspect. Details are not described herein again.

According to a tenth aspect, a communication system is provided. The communication system includes a first access network device and a second access network device. The first access network device is configured to perform the method according to the first aspect, and the second access network device is configured to perform the method according to the second aspect.

According to an eleventh aspect, a computer-readable storage medium is provided, and includes a computer program or instructions. When the computer program or the instructions are run on a computer, the computer is enabled to perform the method according to any one of the possible implementations of the first aspect or the second aspect.

According to a twelfth aspect, a computer program product is provided, and includes a computer program or instructions. When the computer program or the instructions are run on a computer, the computer is enabled to perform the method according to any one of the possible implementations of the first aspect or the second aspect.

### BRIEF DESCRIPTION OF DRAWINGS

FIG. 1 is a diagram of an architecture of a 4G system;
FIG. 2 is a diagram of an architecture of a 4G MBMS;
FIG. 3 is a diagram of a scenario of multi-station coordinated transmission based on a 4G MBMS;
FIG. 4 is a diagram of an architecture of a communication system according to an embodiment of this application;
FIG. 5 is a schematic flowchart of a communication method according to an embodiment of this application;
FIG. 6 is a first diagram of a structure of a communication apparatus according to an embodiment of this application; and
FIG. 7 is a second diagram of a structure of a communication apparatus according to an embodiment of this application.

### DESCRIPTION OF EMBODIMENTS

For ease of understanding, the following first describes technical terms in embodiments of this application.

### 1. 4th generation (4th generation, 4G) mobile communication system.

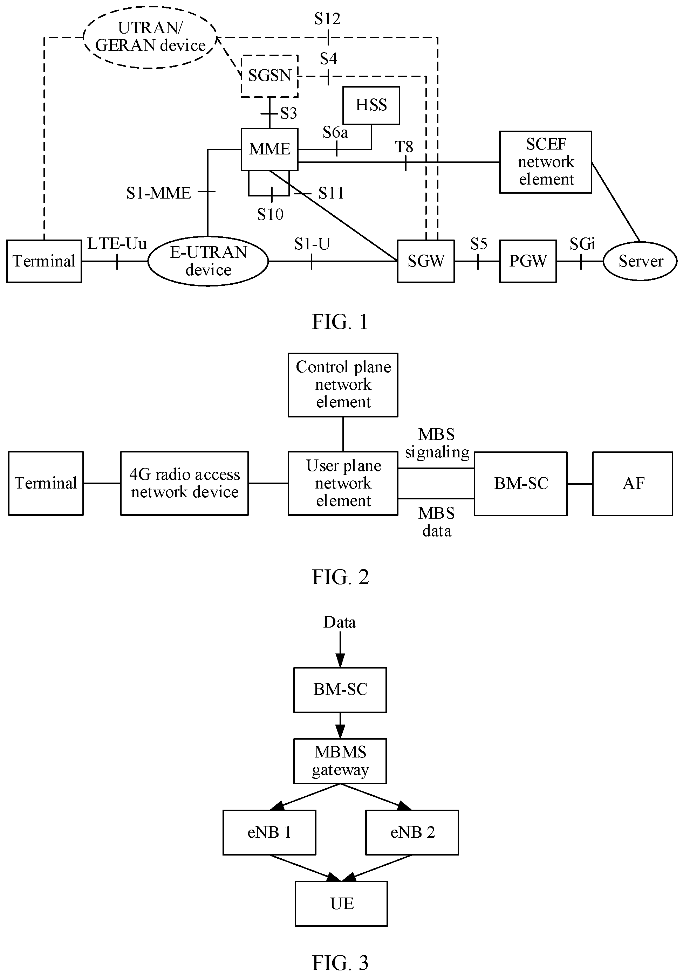

FIG. 1 is a diagram of an architecture of a 4G system. As shown in FIG. 1, the 4G system or an evolved packet system (evolved packet system, EPS) includes a terminal, an evolved universal mobile telecommunications system (universal mobile telecommunications system, UMTS) terrestrial radio access network (evolved UMTS territorial radio access network, E-UTRAN) device, a mobility management entity (mobility management entity, MME), a serving gateway (serving gateway, SGW), a packet data network (packet data network, PDN) gateway (PDN gateway, PGW), a service capability exposure function (service capability exposure function, SCEF) network element, a home subscriber server (home subscriber server, HSS), and other network elements or devices.

The terminal may be a terminal having a transceiver function, or may be a chip or a chip system that may be arranged in the terminal. The terminal may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

The terminal accesses the E-UTRAN device through LTE-Uu. The E-UTRAN device may be an evolved NodeB (eNodeB, eNB) or a next generation-eNB (next generation-eNB, ng-eNB). The E-UTRAN device is mainly configured to provide a network access function for a terminal in a specific area, for example, a network signal coverage area of the E-UTRAN device, so that the terminal can access, through the E-UTRAN device, and be attached to a 4G network. The E-UTRAN device communicates with the MME through an S1-MME, and communicates with the SGW through S1-U. The MME network element is mainly responsible for functions such as mobility management, bearer management, user authentication, and SGW selection. Different MMEs communicate with each other through S10 (FIG. 1 shows only one MME as an example). The MME communicates with the HSS through S6a, the MME communicates with the SGW through S11, the MME communicates with the SCEF network element through T8, the SCEF network element communicates with a server, an SGSN communicates with the MME through S3, the SGSN communicates with the SGW through S4, the SGW communicates with the PGW through S5, and the PGW accesses the server through SGi.

Optionally, to be backward compatible with a general packet radio service (general packet radio service, GPRS) data service provided by a 2G/3G system, and better implement interworking between the 4G system and the 2G/3G system, as shown in FIG. 1, the 4G system may further include a UTRAN/global system for mobile communication (global system for mobile communication, GSM) or enhanced data rate for GSM evolution (enhanced data rate for GSM evolution, EDGE) wireless access network (GSM/EDGE radio access network, GERAN) device of the second generation (the second generation, 2G)/the third generation (the third generation, 3G) system and a serving GPRS support node (serving GPRS support node, SGSN), and they participate in inter-system mobility of the terminal between the 4G system and the 2G/3G system, including mobility in an idle state and handover in a connected state, which are described herein together and are not described below. When the terminal accesses from the 2G/3G system, the terminal communicates with the SGSN through the UTRAN/GERAN device, the UTRAN/GERAN device communicates with the SGW through S12, the SGSN communicates with the MME through S3, and the SGSN communicates with the SGW through S4.

Optionally, the 4G system shown in FIG. 1 may further include another network element, for example, a policy and charging rules function (policy and charging rules function, PCRF) network element in the 4G system. This is not specifically limited in embodiments of this application.

### 2. 4G multimedia broadcast multicast service (multicast broadcast multimedia service, MBMS) architecture.

As shown in FIG. 2, the 4G MBMS architecture includes a terminal, an access network device, a user plane network element, a broadcast-multicast service center (broadcast-multicast service center, BM-SC), and an application function (application function, AF). The BM-SC is configured to authorize an MBMS bearer service. When the terminal expects to use an MBS service, a network side authorizes the terminal for the MBS service by using a user plane. Specifically, the terminal sends a request message to the user plane network element by using a 4G radio access network device, where the request message is used to request to obtain data of an MBS service. After receiving the request message, the user plane network element sends an authorization request to the BM-SC, where the authorization request is used to request to authorize the terminal to obtain the data of the MBS service. After determining whether to authorize the terminal to use the MBS service, the BM-SC returns an authorization result to the user plane network element, where the authorization result includes authorization success or authorization failure. When the authorization result is success, the user plane network element creates or activates a bearer used to transmit MBS data.

### 3. Multi-station coordinated transmission.

Multi-station coordinated transmission may be understood as that a plurality of access network devices may send, to a terminal at a same moment or close moments, signals carrying same data. In this case, the terminal may superimpose and combine the received signals, to increase a signal-to-noise ratio of the signal received by the terminal, and improve communication reliability and capacity.

A 4G MBMS architecture is used as an example. As shown in FIG. 3, after receiving data from an AF, a BM-SC may serve as a control anchor for multi-station coordinated transmission, and process the data through multicast broadcast single frequency network (multicast broadcast single frequency network, MBSFN) technologies. For example, the BM-SC may add, to a downlink data packet through a synchronization (SYNC) protocol function of a protocol stack, a SYNC header that carries timestamp information, to indicate a moment at which an eNB needs to send the downlink data packet to UE. An MBMS gateway may duplicate and distribute downlink data packets processed by the BM-SC to a plurality of eNBs, so that the plurality of eNBs (for example, eNB 1 and eNB 2) can simultaneously send the downlink data packets to the UE, to implement multi-station coordinated transmission.

However, as the control anchor, the BM-SC cannot ensure that the plurality of eNBs can simultaneously send data to the UE. Consequently, efficiency of multi-station coordinated transmission is affected. For example, if a time between an air interface transmission moment indicated by the timestamp information preset by the BM-SC and a current moment is short, the eNB may fail to receive, due to congestion of a link to the BM-SC, a to-be-coordinately transmitted data packet at a transmission time indicated by the timestamp information, that is, a packet loss occurs. Consequently, coordinated transmission cannot be completed, and transmission efficiency is reduced.

For the foregoing technical problem, embodiments of this application provide the following technical solutions, to improve transmission efficiency in multi-station coordinated transmission.

The following describes technical solutions of this application with reference to accompanying drawings.

The technical solutions in embodiments of this application may be applied to various communication systems such as a wireless fidelity (Wi-Fi) system, a vehicle to everything (vehicle to everything, V2X) communication system, a device-to-device (device-to-device, D2D) communication system, an Internet of Vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, a 5th generation (5th generation, 5G), for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are for representing giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

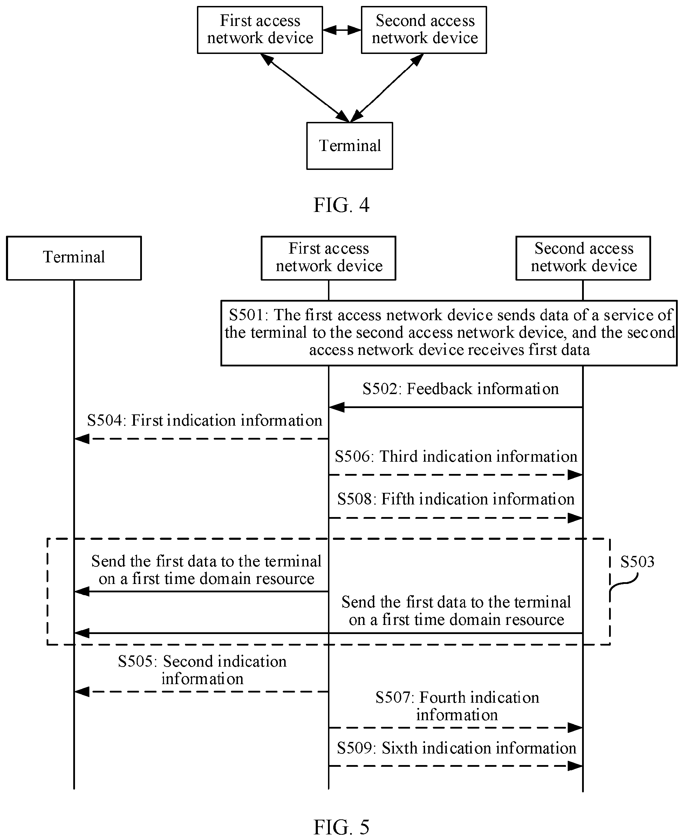

For ease of understanding of embodiments of this application, a communication system shown in FIG. 4 is first used as an example to describe in detail a communication system applicable to embodiments of this application. For example, FIG. 4 is a diagram of an architecture of a communication system applicable to a communication method according to an embodiment of this application.

As shown in FIG. 4, the communication system may include a terminal and at least two access network devices.

For the terminal, refer to the foregoing related descriptions of the terminal. Details are not described again.

The access network device may also be referred to as a radio access network device (radio access network, RAN) device. The RAN device may be a device that provides access for a terminal apparatus. For example, the RAN device may include a next-generation mobile communication system, for example, a 6G access network device such as a 6G base station. Alternatively, in the next-generation mobile communication system, the network device may alternatively be named in another manner, which falls within the protection scope of embodiments of this application. This is not limited in this application. Alternatively, the RAN device may include a gNB in 5G, for example, a new radio (new radio, NR) system, or one or a group (including a plurality of antenna panels) of antenna panels of a base station in 5G, or may be a network node that forms a gNB, a transmission point (transmission and reception point, TRP, or transmission point, TP), or a transmission measurement function (transmission measurement function, TMF), for example, a baseband unit (building baseband unit, BBU), a central unit (central unit, CU) or a distributed unit (distributed unit, DU), an RSU having a base station function, a wired access gateway, or a 5G core network. Alternatively, the RAN device may further include an access point (access point, AP) in a wireless fidelity (wireless fidelity, Wi-Fi) system, a wireless relay node, a wireless backhaul node, various forms of macro base stations, a micro base station (also referred to as a small cell), a relay station, an access point, a wearable device, a vehicle-mounted device, or the like.

A first access network device and a second access network device are used as an example. Serving as a control anchor of multi-station coordinated transmission, and after distributing data of a service of a terminal to the second access network device, the first access network device may determine, based on a feedback of the second access network device, that the second access network device has successfully received at least a part of the data, for example, first data. In this case, both the first access network device and the second access network device obtain the same first data, so that the first data can be sent to the terminal on a same time domain resource, to avoid impact on efficiency of multi-station coordinated transmission caused by asynchronous transmission.

With reference to FIG. 5, the following specifically describes an interaction procedure between network elements/devices in the foregoing communication system by using method embodiments. The communication method provided in embodiments of this application is applicable to the foregoing communication system, and is specifically applied to various scenarios mentioned in the foregoing communication system. The following provides specific descriptions.

FIG. 5 is a first schematic flowchart of a communication method according to an embodiment of this application. The communication method is applicable to the foregoing communication system, and relates to interaction between a terminal, a first access network device, and a second access network device.

Specifically, as shown in FIG. 5, a procedure of the communication method is as follows.

S501: The first access network device sends data of a service of the terminal to the second access network device. The second access network device receives first data.

The service of the terminal may be any possible service, for example, a video service or an audio service. The data of the service may come from a network. The network may be a home network of the terminal, for example, a home public land mobile network (home public land mobile network, HPLMN), or a visited network, for example, a visited public land mobile network (visited public land mobile network, VPLMN). This is not limited. In other words, the first access network device may obtain the data of the service in advance, for example, receive data from a core network via a user plane function (user plane function, UPF) network element in the network.

After receiving the data of the service, the first access network device may determine whether the data of the service is data that needs to be transmitted in a coordinated manner, that is, whether the data of the service is data that needs to be sent by the first access network device and the second access network device on a same time domain resource. In other words, for data of different services, whether multi-station coordinated transmission is performed may be determined by the first access network device based on a type of the service, to ensure that a service requirement is met. For example, the first access network device may determine, based on identifiers of bearers at different layers in a protocol stack, whether the service is a service that needs to be transmitted in a coordinated manner, to determine whether data of the service is data that needs to be transmitted in a coordinated manner.

For example, an example of the protocol stack may be shown in Table 1.

**Table 1**

| |
|---|
| Service data adaptation protocol (service data adaptation protocol, SDAP) |
| Packet data convergence protocol (packet data convergence protocol, PDCP) |
| Radio link control (radio link control, RLC) |
| Medium access control (media access control, MAC) |
| Physical (physical, PHY) |

As shown in Table 1, the first access network device may use a protocol layer as a distributing point, to determine whether data of a service needs to be transmitted in a coordinated manner. In other words, the first access network device may first process the data of the service by using a protocol higher than the distributing point, but cannot determine whether the data of the service needs to be transmitted in a coordinated manner. The first access network device can determine whether the data of the service needs to be transmitted in a coordinated manner only when a protocol corresponding to the distributing point is used for processing. For example, an RLC layer or a MAC layer is used as the distributing point. The first access network device may determine a type of the service based on a data bearer identifier of the data of the service at the RLC layer or a logical channel identifier of the data of the service at the MAC layer, to determine whether the service is a service that needs to be transmitted in a coordinated manner. The first access network device may alternatively use an SDAP layer or a PDCP layer as the distributing point. For a specific implementation, refer to the RLC layer or the MAC layer. Details are not described again.

If the foregoing service is not a service that needs to be transmitted in a coordinated manner, data of the service usually needs to be independently transmitted.

The first access network device may buffer the data of the service into a first buffer (buffer). The first buffer may be configured to buffer data that needs to be independently transmitted. Then, on an appropriate transmission occasion, the first access network device may directly obtain the data of the service from the first buffer and send the data of the service to the terminal without coordination of the second access network device.

It may be understood that, in a possible implementation, control signaling generated or received by the first access network device, for example, a MAC control element (MAC control element, MAC CE), radio resource control (radio resource control, RRC) signaling, a PDCP control protocol data unit (packet data unit, PDU), or an RLC control PDU, usually needs to be sent to the terminal quickly, and is not suitable for coordinated transmission. Therefore, the first access network device may also place the control signaling in the first buffer, to implement independent transmission.

Alternatively, if the service is a service that needs to be transmitted in a coordinated manner, data of the service usually needs to be transmitted in a coordinated manner.

The first access network device may buffer the data of the service in a second buffer. The second buffer may be configured to buffer data that needs to be transmitted in a coordinated manner.

It may be understood that the first access network device implementing independent transmission and coordinated transmission via a buffer is merely an example. This is not limited. For example, the first access network device may alternatively set two sets of threads, one set of threads is used to implement independent transmission, and the other set of threads is used to implement assisted transmission.

The first access network device may further send the data of the service to the second access network device. For example, the first access network device may duplicate the data of the service once through a general packet radio service (general packet radio service, GPRS) tunneling protocol-user plane (GPRS tunneling protocol-user plane, GTP-U), and then send the data of the service to the second access network device through a backhaul link, to implement data distributing. In a duplication process, the first access network device may add corresponding SNs to the data of the service according to a sending order of the data of the service, and then sequentially send the data of the service to the second access network device through the backhaul link.

An example is as follows:
Data of a service includes six data packets, which are respectively data packet #0, data packet #1, data packet #2, ..., and data packet #5 in a sending order from first to last. The first access network device may add SN #0 to a GTP-U packet header encapsulated in data packet #0, add SN #1 to a GTP-U packet header encapsulated in data packet #1, and by analogy, add SN #5 to a GTP-U packet header encapsulated in data packet #5, and sequentially send data packet #0, data packet #1, data packet #2, ..., and data packet #5 to the second access network device through the backhaul link.

For the second access network device, because a transmission delay results in a lag for receiving relative to sending, in a period of time after the first access network device sends the data of the service, the second access network device may successfully receive at least a part of the data of the service, for example, first data. The second access network device may buffer the first data, for example, place the first data in a third buffer. For example, the second access network device may sort the first data in a sending order based on SNs of the first data, to place the sorted data in the third buffer. The third buffer is similar to the foregoing second buffer, and may be understood with reference to the second buffer. Details are not described again.

It may be understood that the second access network device implementing coordinated transmission by using a buffer is merely an example. This is not limited. For example, the second access network device may alternatively implement assisted transmission by setting a set of threads.

In addition, the second access network device may further determine, based on the SNs of the first data, whether there is data that is not successfully received within transmission duration since the first data is received, for example, second data different from the first data. The SNs of the first data may represent the sending order of the first data. The transmission duration may be duration allowed for data transmission between the first access network device and the second access network device. If data that should be received before specific time is still not received within the transmission duration, the second access network device no longer receives the data, and it may be considered that a packet loss occurs. In other words, the transmission duration is set, so that the second access network device can accurately determine data that is not successfully received because the data is being transmitted and data that is not successfully received because of a packet loss, to avoid incorrect determining.

For example, the second access network device may periodically obtain SNs of all data (that is, the first data) that is successfully received currently, determine a largest SN and a smallest SN from the SNs, and use the largest SN and the smallest SN as two endpoints to determine an SN sequence, where the SN sequence is denoted as SN sequence #1. The second access network device may determine, based on the SNs of all the data, whether data corresponding to the SN in SN sequence #1 is not received currently, where the data is denoted as to-be-received data. That is, the to-be-received data is data that should be received currently but is actually not received. For the to-be-received data, the second access network device may determine, in subsequent transmission duration, whether the to-be-received data is received. In this case, if the to-be-received data is still not received, the second access network device determines that the data is data that is not successfully received, that is, the second data. If the to-be-received data is received, the second access network device determines that the data is data that is successfully received.

The foregoing example continues to be used:
In cycle #0, the second access network device determines data packet #0, data packet #1, and data packet #2 that are currently received, where the largest SN is SN #2, the smallest SN is SN #0, and SN sequence #1 is SN #0-SN #1-SN #2. In this case, there is no to-be-received data, that is, no packet loss occurs in cycle #0, and the second access network device buffers data packet #0, data packet #1, and data packet #2. Then, in cycle #1, the second access network device determines data packet #0, data packet #1, data packet #2, data packet #4, and data packet #5 that are currently received, where the largest SN is SN #5, the smallest SN is SN #0, and SN sequence #1 is SN #0-SN #1→SN #2→SN #4→SN #5. In this case, the to-be-received data is a data packet corresponding to SN #3. The second access network device may determine, in subsequent transmission duration, whether the data packet corresponding to SN #3 is received. If the data packet corresponding to SN #3, that is, data packet #3, is received, the second access network device may buffer data packet #3, data packet #4, and data packet #5. If the data packet corresponding to SN #3 is not received, the second access network device determines that the data packet corresponding to SN #3 is data that is not successfully received, that is, the data packet corresponding to SN #3 is lost. In this case, only data packet #4 and data packet #5 are buffered.

S502: The second access network device sends feedback information to the first access network device based on the first data. The first access network device receives the feedback information from the second access network device.

The feedback information may be used to determine that the first data is successfully received by the second access network device, for example, a first identifier of the first data and/or a second identifier of the second data. The first identifier may be an SN of the first data, and the SN may represent a sending order of the first data, and is used by the first access network device to determine a receiving state of the second access network device. Similarly, the second identifier may be an SN of the second data, and the SN may represent a sending order of the second data, and is used by the first access network device to determine a packet loss state of the second access network device.

Optionally, the feedback information may further include an indication information element, to indicate whether an SN in the feedback information is an SN of data that is successfully received, that is, an SN of the first data, or an SN of data that is not successfully received, that is, an SN of the second data. Certainly, if the feedback information includes, by default, the SN of data that is successfully received, or includes, by default, the SN of data that is not successfully received, the feedback information may not include the indication information element.

In this embodiment of this application, the second access network device may send the feedback information in a plurality of manners. The following specifically describes the manners.

### Manner 1:

The second access network device may periodically send feedback information to the first access network device. Feedback information sent in each cycle may include an SN of data that is successfully received by the second access network device in the cycle, for example, an SN of data that is buffered in the cycle, and/or an SN of data that is not successfully received by the second access network device in the cycle. On this basis, the first data may be data that is successfully received by the second access network device in one or more cycles, and the second data may be data that is not successfully received by the second access network device in the one or more cycles.

The foregoing example continues to be used:
The second access network device feeds back only an SN of data that is successfully received in each cycle. In this case, in cycle #0, no packet loss occurs on the second access network device, and the second access network device may send feedback information #0, including SN #0, SN #1, and SN #2. Then, in cycle #1, a packet loss occurs on the second access network device, but not all packets are lost. Therefore, the second access network device may also send feedback information #1, including SN #4 and SN #5.

Alternatively, the second access network device feeds back only an SN of data that is not successfully received in each cycle. In this case, in cycle #0, no packet loss occurs on the second access network device, and the second access network device may not send feedback information #0. Then, in cycle #1, a packet loss occurs on the second access network device. Therefore, the second access network device may send feedback information #1, including SN #3.

Alternatively, the second access network device feeds back not only an SN of data that is successfully received in each cycle, but also an SN of data that is not successfully received in each cycle. In this case, in cycle #0, the second access network device may send feedback information #0, including an SN of data that is successfully received in cycle #1, that is, SN #0, SN #1, and SN #2, and an SN of data that is not successfully received in cycle #0, where the SN is empty. Then, in cycle #1, the second access network device may send feedback information #1, including an SN of data that is successfully received in cycle #1, that is, SN #4 and SN #5, and an SN of data that is not successfully received in cycle #1, that is, SN #3.

It can be learned that if the second access network device feeds back only an SN of data that is successfully received in each cycle, when the second access network device does not successfully receive any data in a cycle, the second access network device may not send feedback information for the cycle. Similarly, if the second access network device feeds back only an SN of data that is not successfully received in each cycle, when the second access network device successfully receives all data in a cycle, the second access network device may not send feedback information for the cycle. However, if the second access network device feeds back not only an SN of data that is successfully received in each cycle, but also an SN of data that is not successfully received in each cycle, the second access network device needs to send feedback information for each cycle.

In addition, a cycle in which the second access network device sends feedback information may be the same as or different from a cycle in which the second access network device obtains an SN in 501. This is not specifically limited.

### Manner 2:

The second access network device may send feedback information to the first access network device when a packet loss occurs. In this case, the feedback information may include an SN of data that is successfully received by the second access network device when the packet loss occurs, or an SN of data that is buffered when the packet loss occurs, and/or an SN of data that is lost for the second access network device, or an SN of data that is not successfully received. On this basis, the first data may be the data that is successfully received by the second access network device when the packet loss occurs, and the second data may be the data that is lost for the second access network device.

The foregoing example continues to be used:
When determining that a data packet corresponding to SN #3 is lost, the second access network device sends feedback information to the first access network device, including SNs of data that is successfully received before the data packet corresponding to SN #3 is lost, that is, SN #0, SN #1, SN #2, SN #4, and SN #5, and/or an SN of a lost data packet, that is, SN #3.

### Manner 3:

An occasion on which the second access network device sends feedback information may be triggered by the first access network device. In other words, the second access network device may send the feedback information to the first access network device based on an indication of the first access network device. The feedback information may include an SN of data that is successfully received by the second access network device and/or an SN of data that is not successfully received by the second access network device when the indication of the first access network device is received. On this basis, when the second access network device receives the indication of the first access network device, the data that is successfully received may be understood as the first data, and the data that is not successfully received may be understood as the second data.

The foregoing example continues to be used:
After determining that a data packet corresponding to SN #3 is lost, the second access network device receives an indication of the first access network device, and therefore sends feedback information #1 to the first access network device. Feedback information #1 includes SNs of data that is successfully received when the indication of the first access network device is received, that is, SN #0, SN #1, SN #2, SN #4, and SN #5, and/or an SN of data that is not successfully received, that is, SN #3.

Manner 4: The second access network device may send, to the first access network device for each piece of data (or each data packet) that is successfully received, one piece of feedback information corresponding to the data. In this case, there may be one or more pieces of feedback information, and each piece of feedback information may include an SN of one piece of data that is successfully received by the second access network device. In this case, the first data may include one or more pieces of data, or one or more data packets.

The foregoing example continues to be used:
When successfully receiving data packet #0, data packet #1, and data packet #2, the second access network device separately sends, to the first access network device, feedback information #0 carrying SN #0, feedback information #1 carrying SN #1, and feedback information #2 carrying SN #2. Then, because the second access network device does not successfully receive the data packet corresponding to SN #3, the second access network device may not send feedback information #3. Then, when successfully receiving data packet #4 and data packet #5, the second access network device separately sends, to the first access network device, feedback information #4 carrying SN #4 and feedback information #5 carrying SN #5. Optionally, when determining that the data packet corresponding to SN #3 is lost, the second access network may alternatively send feedback information #3, to indicate that the data packet corresponding to SN #3 is lost.

For the first access network device, the first access network device may determine, based on the first identifier of the first data and/or the second identifier of the second data, that the first data is successfully received by the second access network device and that the second data is not successfully received by the second access network device. Details are described below.

### Case 1:

When the first access network device receives the first identifier of the first data, the first access network device may determine, based on the first identifier, that the first data is successfully received by the second access network device and that the second data is not successfully received by the second access network device. For example, the first access network device may determine, based on an SN of the first data, that data corresponding to the SN is data that is successfully received by the second access network device, that is, the first data. On this basis, the first access network device may determine a largest SN and a smallest SN from SNs of the first data, and use the largest SN and the smallest SN as two endpoints to determine an SN sequence, where the SN sequence is denoted as SN sequence #2. The first access network device may determine whether SNs in SN sequence #2 are the same as the SNs of the first data. If the SNs in SN sequence #2 are different from the SNs of the first data, an SN that is in SN sequence #2 and that is different from the SNs of the first data is an SN of data that is not successfully received by the second access network device, that is, an SN of the second data. In this way, the first access network device may determine, based on the different SN, that the second data is not successfully received by the second access network device. If the SNs in SN sequence #2 are the same as the SNs of the first data, it indicates that currently there is no data that is not successfully received by the second access network device.

It may be understood that the first access network device may send data of a service in a specific order. In this way, even if the second access network device feeds back only a sequence number of data that is successfully received, the first access network device can determine, based on the sending order, data that is not successfully received by the second access network device, to further reduce overheads of feedback information and improve communication efficiency.

The foregoing example continues to be used:
The first access network device obtains SN #0, SN #1, SN #2, SN #4, and SN #5 from received feedback information, where a largest SN is SN #5, a smallest SN is SN #0, and SN sequence #2 is SN #0-SN #1→SN #2→SN #3→SN #4→SN #5. The first access network device determines that SN #3 in SN sequence #2 is different from the SNs obtained by the first access network device from the feedback information, to determine that data packet #3 corresponding to SN #3 is not successfully received by the second access network device.

### Case 2:

When the first access network device receives the second identifier of the second data, the first access network device may determine, based on the second identifier, that the first data is successfully received by the second access network device and that the second data is not successfully received by the second access network device. For example, the first access network device may determine, based on an SN of the second data, that data corresponding to the SN is data that is not successfully received by the second access network device, that is, the second data. On this basis, the first access network device may determine, based on the SN of the second data, data that is sent before the second data, where the data that is sent before the second data is the first data that is successfully received by the second access network device, that is, determine that the first data is successfully received by the second access network device. In addition, for data that is sent after the second data, if the first access network device does not receive, in a period of time, an SN fed back by the second access network device for the data, the first access network device may also determine that the data is successfully received by the second access network device.

It may be understood that the first access network device may send data of a service in a specific order. In this way, even if the second access network device feeds back only a sequence number of data that is not successfully received, the first access network device can determine, based on the sending order, data that is successfully received by the second access network device, to further reduce overheads of feedback information and improve communication efficiency.

The foregoing example continues to be used:
The first access network device may obtain SN #3 from received feedback information, to determine that data packet #3 corresponding to SN #3 is not successfully received by the second access network device and that data packet #0, data packet #1, and data packet #2 corresponding to SN #0, SN #1, and SN #2 that are before SN #3 are successfully received by the second access network device. Then, the first access network device does not receive SN #4 and SN #5 that are fed back by the second access network device, and therefore determines that data packet #4 and data packet #5 are successfully received by the second access network device.

### Case 3:

When the first access network device receives the first identifier of the first data and the second identifier of the second data, the first access network device may directly determine, based on the first identifier and the second identifier, that the first data is successfully received by the second access network device and that the second data is not successfully received by the second access network device. Details are not described again.

It may be understood that, because the first access network device has determined in advance that multi-station coordinated transmission needs to be performed on the data of the service (with reference to S501), the first access network device may trigger S503 when determining that the first data is successfully received by the second access network device.

S503: The first access network device sends the first data to the terminal on a first time domain resource, and the second access network device sends the first data to the terminal on the first time domain resource.

The first time domain resource may be one or more time units. The time unit may be one or more of the following: a symbol (symbol), a slot (slot), a mini-slot (mini-slot), a subframe (subframe), a radio frame (radio frame), and the like. This is not limited. The first time domain resource may be a static resource, for example, a time domain resource that is pre-agreed upon by the first access network device and the second access network device, or may be a dynamic resource, for example, a time domain resource that the first access network device and the second access network device dynamically determine to use. This is not specifically limited.

It may be understood that the first access network device has processed the first data in advance by using a higher layer protocol (a protocol layer used as a distributing point), to implement data distributing (with reference to S501). Therefore, in S503, the first access network device may directly process the first data by using an underlying protocol (a protocol at a layer below the distributing point), to include the first data in the first time domain resource, and therefore send the first data to the terminal. For example, the RLC layer is used as a distributing point. The first access network device may process the first data by using a MAC layer protocol and a PHY layer protocol. In addition, because the second access network device does not sense a protocol at a layer higher than the distributing point, in S503, the second access network device may directly process the first data by using an underlying protocol (a protocol at a layer below the distributing point), to include the first data in the first time domain resource, and therefore send the first data to the terminal.

In addition, for the first access network device, there may be a specific time domain offset between a time domain location of the first time domain resource and a reference time domain location, where the specific time domain offset is denoted as time domain offset #1. For the second access network device, there may also be a specific time domain offset between the time domain location of the first time domain resource and the reference time domain location, where the specific time domain offset is denoted as time domain offset #2. Time domain offset #1 may be the same as or different from time domain offset #2. This is not specifically limited, provided that it can be ensured that the first data sent by the first access network device and the first data sent by the second access network device arrive at the terminal at a same moment (or at close moments).

It may be further understood that, in a case of assisted transmission, data that can be scheduled by the first access network device includes data of a service received by the first access network device, and data that can be scheduled by the second access network device includes only first data received by the second access network device. In this case, if a scheduling behavior of the first access network device is not restricted, the first access network device may schedule more data for downlink transmission. Consequently, assisted transmission is asynchronous, and receiving performance of the terminal is affected. Therefore, the scheduling behavior of the first access network device should be restricted, that is, the first access network device can schedule only common data, for example, first data, to ensure that content of to-be-transmitted data of the first access network device is consistent with content of to-be-transmitted data of the second access network device when the first access network device and the second access network device perform assisted transmission.

In conclusion, after distributing the data of the service of the terminal to the second access network device, the first access network device as a control anchor of multi-station coordinated transmission may determine, based on a feedback of the second access network device, that the second access network device has successfully received at least a part of the data, for example, the first data. In this case, both the first access network device and the second access network device obtain the same first data, so that the first data can be sent to the terminal on a same time domain resource, to avoid impact on efficiency of multi-station coordinated transmission caused by asynchronous transmission.

With reference to the foregoing embodiment, a first possible design solution is as follows:

After S502 and before S503, the first access network device may further determine whether a data amount of the first data has reached a data amount threshold. The data amount threshold may be a data amount that triggers the first access network device and the second access network device to send data on a same time domain resource. If the data amount of the first data does not reach the data amount threshold, the first access network device does not trigger S503, to avoid an increase in transmission overheads caused by an excessively small amount of data sent at a time. If the data amount of the first data has reached the data amount threshold, the first access network device triggers S503. In addition, the second access network device may also determine whether the data amount of the first data has reached the data amount threshold. If the data amount of the first data does not reach the data amount threshold, the second access network device does not trigger S503. If the data amount of the first data has reached the data amount threshold, the second access network device triggers S503; and/or
after S502 and before S503, the first access network device may further determine whether duration for which the first access network device stores the first data has reached first threshold duration. The first threshold duration may be duration for which the first data remains valid on the first access network device. If the duration for which the first access network device stores the first data does not reach the first threshold duration, the first access network device does not trigger S503. If the duration for which the first access network device stores the first data has reached the first threshold duration, the first access network device triggers S503. In other words, the first access network device needs to send the first data before the first data is invalid, to prevent a service of the terminal from being affected due to invalid data. In addition, the second access network device may also determine whether duration for which the second access network device stores the first data has reached second threshold duration. The second threshold duration may be duration for which the first data remains valid on the second access network device. If the duration for which the second access network device stores the first data does not reach the second threshold duration, the first access network device does not trigger S503. If the duration for which the second access network device stores the first data has reached the second threshold duration, the second access network device triggers S503.

With reference to the foregoing embodiment, a second possible design solution is as follows:
Before S503, the method further includes: S504: The first access network device sends first indication information to the terminal, and the terminal receives the first indication information from the first access network device.

The first access network device may send the first indication information to the terminal on any transmission occasion before S503. This is not specifically limited. The first indication information may be used to trigger the terminal to measure a channel. The channel may be a channel between the first access network device and the terminal and between the second access network device and the terminal, and is denoted as an integrated channel. Therefore, after sending the first indication information, both the first access network device and the second access network device may send a reference signal, for example, a channel state information reference signal (channel state information reference signal, CSI-RS), to the terminal.

The terminal may receive the reference signal based on an indication of the first indication information, to perform channel measurement based on the reference signal, and separately send a channel measurement result to the first access network device and the second access network device. The channel measurement result may represent a state of the integrated channel, for example, channel state information (channel state information, CSI). In this way, in S503, the first access network device may determine, based on the state of the integrated channel, to send the first data to the terminal on the first time domain resource, to ensure that transmission between the first access network device and the terminal matches the state of the channel, so as to improve communication efficiency. Similarly, the second access network device may also determine, based on the state of the integrated channel, to send the first data to the terminal on the first time domain resource, to ensure that transmission between the second access network device and the terminal matches the state of the channel, so as to improve communication efficiency.

With reference to the foregoing embodiment, a third possible design solution is as follows:
After S503, the method further includes: S505: The first access network device sends second indication information to the terminal, and the terminal receives the second indication information from the first access network device.

The second indication information may indicate the terminal to suspend or stop measuring the channel. For example, as multi-station coordinated transmission is performed, a data amount of data stored by both the first access network device and the second access network device may be reduced to fail to meet a data amount requirement of multi-station coordinated transmission, for example, less than the foregoing data amount threshold, or reduced to no data. In this case, the first access network device and the second access network device do not need to perform multi-station coordinated transmission, in other words, do not need to continue to send data on a same time domain resource. Therefore, the first access network device may send the second indication information to the terminal, to avoid unnecessary overheads caused because the terminal continues to perform redundant channel measurement.

With reference to the foregoing embodiment, a fourth possible design solution is as follows:

Before S503, the method further includes: S506: The first access network device sends third indication information to the second access network device, and the second access network device receives the third indication information from the first access network device.

Manner A: When the second access network device sends the reference signal by default, the third indication information may indicate a time-frequency location of the reference signal. In other words, specific time-frequency resources on which the second access network device sends the reference signal may be dynamically indicated by the first access network device by using the third indication information. For example, the third indication information may include resource indexes of these time-frequency resources.

Manner B: When the second access network device sends the reference signal on a pre-configured or pre-agreed time-frequency resource by default, the third indication information may indicate that the second access network device needs to send the reference signal to the terminal. In other words, whether the second access network device sends the reference signal may be dynamically indicated by the first access network device by using the third indication information, to avoid a channel measurement failure caused because the second access network device does not send the reference signal.

Manner C: The third indication information may indicate that the second access network device needs to send the reference signal to the terminal, and indicate a time-frequency location of the reference signal. In other words, whether the second access network device sends the reference signal and specific time-frequency resources on which the reference signal is sent may be dynamically indicated by the first access network device by using the third indication information. For a specific implementation, refer to related descriptions of Manner A and Manner B. Details are not described again.

It may be understood that Manner A to Manner C are merely some examples. For example, the first access network device and the second access network device may send the reference signal by default, and send the reference signal on a pre-configured or pre-agreed time-frequency resource by default.

With reference to the foregoing embodiment, a fifth possible design solution is as follows:
After S503, the method further includes: S507: The first access network device further sends fourth indication information to the second access network device, and the second access network device receives the fourth indication information from the first access network device.

If the first access network device and the second access network device no longer need to perform multi-station coordinated transmission, the first access network device may send the fourth indication information to the second access network device, to indicate the second access network device to suspend or stop sending the reference signal to the channel, so as to avoid unnecessary overheads caused because the second access network device continues to send a redundant reference signal.

With reference to the foregoing embodiment, a sixth possible design solution is as follows:
Before S503, the method further includes: S508: The first access network device sends fifth indication information to the second access network device, and the second access network device may receive the fifth indication information from the first access network device.

The fifth indication information may be used to trigger the second access network device and the first access network device to send data on a same time domain resource, that is, trigger S503. In other words, the second access network device may also trigger, based on an indication of the first access network device, to start multi-station coordinated transmission, to perform multi-station coordinated transmission as required.

It may be understood that S508 is an optional step. For example, after sending feedback information to the first access network device, the second access network device may trigger to start multi-station coordinated transmission, that is, trigger S503. In this case, S508 is not performed. In addition, the third indication information and the fifth indication information may be same indication information, or may be different indication information. This is not limited.

With reference to the foregoing embodiment, a seventh possible design solution is as follows:
After S503, the method further includes: S509: The first access network device sends sixth indication information to the second access network device, and the second access network device receives the sixth indication information from the first access network device.

For example, if the first access network device and the second access network device no longer need to perform multi-station coordinated transmission, the first access network device may send the sixth indication information to the second access network device, to trigger the second access network device to suspend or stop sending data on a same time domain resource as the first access network device, that is, suspend or stop multi-station coordinated transmission, to avoid unnecessary overheads caused because the second access network device continues to send redundant data.

It may be understood that the fourth indication information and the sixth indication information may be same indication information, or may be different indication information. This is not limited.

It may be further understood that the foregoing design solutions may be implemented in combination. For example, the first access network device may trigger sending one or more of the first indication information, the third indication information, or the fifth indication information based on a case in which the data amount of the first data has reached the data amount threshold and/or the duration for which the first access network device stores the first data has reached the first threshold duration.

With reference to the foregoing embodiment, an eighth possible design solution is as follows:
For the second data that is not successfully received by the first access network device, the first access network device may transfer the second data from the second buffer to the first buffer, so that the first access network device can independently send the second data to the terminal subsequently. For example, the first access network device may send the second data to the terminal on a second time domain resource different from the first time domain resource. In other words, when the second access network device does not successfully receive some data, the first access network device needs to adjust the data for independent transmission in a timely manner, to avoid a case in which the terminal cannot successfully receive the data due to different data sent on a same time domain resource.

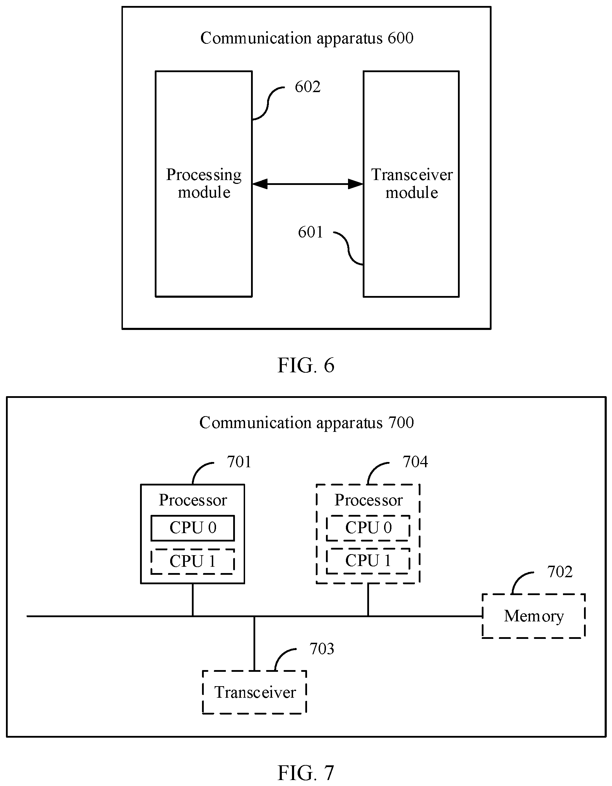

The foregoing describes in detail, with reference to FIG. 5, the communication method provided in embodiments of this application. A communication apparatus configured to perform the communication method according to embodiments of this application is described below in detail with reference to FIG. 6 and FIG. 7.

FIG. 6 is a first diagram of a structure of a communication apparatus according to an embodiment of this application. For example, as shown in FIG. 6, the communication apparatus 600 includes a transceiver module 601 and a processing module 602. For ease of description, FIG. 6 merely shows main components of the communication apparatus.

In some embodiments, the communication apparatus 600 may be used in the communication system shown in FIG. 4, and perform a function of a first access network device in the method shown in FIG. 5.

The transceiver module 601 is configured to: send data of a service of a terminal to a second access network device, and receive feedback information from the second access network device. The feedback information is used to determine that first data is successfully received by the second access network device, and the first data is at least a part of the data of the service. Then, the processing module 602 is configured to control, on a first time domain resource, the transceiver module 601 to send the first data to the terminal. The first time domain resource is further used by the second access network device to send the first data to the terminal.

In a possible design solution, the feedback information includes a first identifier of the first data and/or a second identifier of second data that is in the data of the service and that is not successfully received by the second access network device, and the second data is different from the first data. The processing module 602 is further configured to determine, based on the first identifier and/or the second identifier, that the first data is successfully received by the second access network device.

Optionally, the second identifier is a sequence number of the second data, and the sequence number of the second data represents a sending order of the second data. The processing module 602 is further configured to determine, based on the sequence number of the second data, data sent before the second data. The data sent before the second data is the first data that is successfully received by the second access network device.

Optionally, the processing module 602 is further configured to determine, based on the first identifier and/or the second identifier, that the second data is not successfully received by the second access network device. The processing module 602 is further configured to control, on a second time domain resource, the transceiver module 601 to send the second data to the terminal. The second time domain resource is a time domain resource different from the first time domain resource.

In a possible design solution, the processing module 602 is further configured to: before sending the first data to the terminal on the first time domain resource, determine that a data amount of the first data has reached a data amount threshold. The data amount threshold is a data amount that triggers the communication apparatus 600 and the second access network device to send data on a same time domain resource; and/or the processing module 602 is further configured to: before sending the first data to the terminal on the first time domain resource, determine that duration for storing the first data by the communication apparatus 600 has reached first threshold duration. The first threshold duration is duration for which the first data remains valid on the communication apparatus 600.

In a possible design solution, the transceiver module 601 is further configured to: before sending the first data to the terminal on the first time domain resource, send first indication information to the terminal, and receive a channel measurement result from the terminal. The first indication information is used to trigger the terminal to measure a channel. The channel is a channel between the communication apparatus 600 and the terminal and between the second access network device and the terminal. The channel measurement result represents a state of the channel. Correspondingly, the processing module 602 is further configured to determine, based on the state of the channel, to send the first data to the terminal on the first time domain resource.

Optionally, the transceiver module 601 is further configured to: after sending the first data to the terminal on the first time domain resource, send second indication information to the terminal. The second indication information indicates the terminal to suspend measuring the channel.

Optionally, the transceiver module 601 is further configured to: before sending the first data to the terminal on the first time domain resource, send third indication information to the second access network device. The third indication information indicates that the second access network device needs to send a reference signal to the terminal, and the reference signal is used by the terminal to measure the channel.

Further, the transceiver module 601 is further configured to: after sending the first data to the terminal on the first time domain resource, send fourth indication information to the second access network device. The fourth indication information indicates the second access network device to suspend sending the reference signal.

In a possible design solution, the transceiver module 601 is further configured to: before sending the first data to the terminal on the first time domain resource, send fifth indication information to the second access network device. The fifth indication information is used to trigger the second access network device and the communication apparatus 600 to send data on a same time domain resource.

Optionally, the transceiver module 601 is further configured to: after sending the first data to the terminal on the first time domain resource, send sixth indication information to the second access network device. The sixth indication information is used to trigger the second access network device and the communication apparatus 600 to suspend sending the data on the same time domain resource.

In a possible design solution, the transceiver module 601 is further configured to: before sending the data of the service of the terminal to the second access network device, obtain the data of the service. The processing module 602 is further configured to determine that the data of the service is data that needs to be sent by the communication apparatus 600 and the second access network device on a same time domain resource.

Optionally, the transceiver module 601 may include a sending module (not shown in FIG. 6) and a receiving module (not shown in FIG. 6). The sending module is configured to implement a sending function of the communication apparatus 600, and the receiving module is configured to implement a receiving function of the communication apparatus 600.

Optionally, the communication apparatus 600 may further include a storage module (not shown in FIG. 6). The storage module stores a program or instructions. When the processing module 602 executes the program or the instructions, the communication apparatus 600 may perform the function of the first access network device in the method shown in FIG. 5 in the foregoing method.

It may be understood that the communication apparatus 600 may be a network device, for example, a first access network device, may be a chip (system) or another part or component that may be disposed in a network device, or may be an apparatus including a network device. This is not limited in this application.

In addition, for technical effects of the communication apparatus 600, refer to the technical effects of the communication method shown in FIG. 5. Details are not described herein again.

In some embodiments, the communication apparatus 600 may be used in the communication system shown in FIG. 4, and perform the function of the second access network device in the method shown in FIG. 5.

The transceiver module 601 is configured to receive first data. The processing module 602 is configured to control, based on the first data, the transceiver module 601 to send feedback information to the first access network device. The first data is at least a part of data of a service of a terminal, the data of the service is data sent by the first access network device to the communication apparatus 600, and the feedback information is used to determine that the first data is successfully received by the communication apparatus 600. In this way, the processing module 602 is further configured to control, on a first time domain resource, the transceiver module 601 to send the first data to the terminal. The first time domain resource is further used by the first access network device to send the first data to the terminal.

In a possible design solution, the feedback information may include a first identifier of the first data and/or a second identifier of second data that is in the data of the service and that is not successfully received by the communication apparatus 600, and the second data is different from the first data.

Optionally, a sequence number of the first data represents a sending order of the first data. The processing module 602 is further configured to: after the transceiver module 601 receives the first data and before the transceiver module 601 sends the feedback information to the first access network device, determine, based on the sequence number of the first data, that data that is not successfully received within transmission duration since the first data is received is the second data. The transmission duration may be duration allowed for data transmission between the first access network device and the communication apparatus 600.

In a possible design solution, the processing module 602 is further configured to: before sending the first data to the terminal on the first time domain resource, determine that a data amount of the first data has reached a data amount threshold, where the data amount threshold is a data amount that triggers the first access network device and the communication apparatus 600 to send data on a same time domain resource; and/or the processing module 602 is further configured to determine, on the first time domain resource, that duration for storing the first data by the communication apparatus 600 has reached second threshold duration, where the second threshold duration is duration for which the first data remains valid on the communication apparatus 600.

In a possible design solution, the transceiver module 601 is further configured to: before sending the first data to the terminal on the first time domain resource, receive third indication information from the first access network device. The processing module 602 is further configured to control, based on the third indication information, the transceiver module 601 to send a reference signal. The third indication information indicates that the communication apparatus 600 needs to send the reference signal. The reference signal is used by the terminal to measure a channel. The channel is a channel between the first access network device and the terminal and between the communication apparatus 600 and the terminal.

Optionally, the transceiver module 601 is further configured to: after sending the first data to the terminal on the first time domain resource, receive fourth indication information from the first access network device. The fourth indication information indicates the communication apparatus 600 to suspend sending the reference signal.

In a possible design solution, the transceiver module 601 is further configured to: before sending the first data to the terminal on the first time domain resource, receive fifth indication information from the first access network device. The fifth indication information is used to trigger the communication apparatus 600 and the first access network device to send data on a same time domain resource.

Optionally, the transceiver module 601 is further configured to: after sending the first data to the terminal on the first time domain resource, receive sixth indication information from the first access network device. The sixth indication information is used to trigger the communication apparatus 600 and the first access network device to suspend sending the data on the same time domain resource.

Optionally, the transceiver module 601 may include a sending module (not shown in FIG. 6) and a receiving module (not shown in FIG. 6). The sending module is configured to implement a sending function of the communication apparatus 600, and the receiving module is configured to implement a receiving function of the communication apparatus 600.

Optionally, the communication apparatus 600 may further include a storage module (not shown in FIG. 6). The storage module stores a program or instructions. When the processing module 602 executes the program or the instructions, the communication apparatus 600 may perform the function of the second access network device in the method shown in FIG. 5 in the foregoing method.

It may be understood that the communication apparatus 600 may be a network device, for example, a second access network device, may be a chip (system) or another part or component that may be disposed in a network device, or may be an apparatus including a network device. This is not limited in this application.

In addition, for technical effects of the communication apparatus 600, refer to the technical effects of the communication method shown in FIG. 5. Details are not described herein again.

FIG. 7 is a second diagram of a structure of a communication apparatus according to an embodiment of this application. For example, the communication apparatus may be a terminal, or may be a chip (system) or another part or component that may be disposed in the terminal. As shown in FIG. 7, the communication apparatus 700 may include a processor 701. Optionally, the communication apparatus 700 may further include a memory 702 and/or a transceiver 703. The processor 701 is coupled to the memory 702 and the transceiver 703, for example, may be connected to the memory 702 and the transceiver 703 through a communication bus. In addition, the communication apparatus 700 may also be a chip, for example, include the processor 701. In this case, the transceiver may be an output/input interface of the chip.

The following describes each part in the communication apparatus 700 in detail with reference to FIG. 7.

The processor 701 is a control center of the communication apparatus 700, and may be one processor, or may be a general term of a plurality of processing elements. For example, the processor 701 is one or more central processing units (central processing units, CPUs), may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

Optionally, the processor 701 may perform various functions of the communication apparatus 700 by running or executing a software program stored in the memory 702 and invoking data stored in the memory 702, for example, perform the communication method shown in FIG. 5.

During specific implementation, in an embodiment, the processor 701 may include one or more CPUs, for example, a CPU 0 and a CPU 1 shown in FIG. 7.

During specific implementation, in an embodiment, the communication apparatus 700 may alternatively include a plurality of processors, for example, the processor 701 and a processor 704 shown in FIG. 7. Each of the processors may be a single-core processor (single-CPU), or may be a multi-core processor (multi-CPU). The processor herein may be one or more devices, circuits, and/or processing cores configured to process data (for example, computer program instructions).

The memory 702 is configured to store a software program for performing the solutions of this application, and the processor 701 controls execution of the software program. For a specific implementation, refer to the foregoing method embodiment, and details are not described herein again.

Optionally, the memory 702 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. This is not limited thereto. The memory 702 may be integrated with the processor 701, or may exist independently, and is coupled to the processor 701 through an interface circuit (not shown in FIG. 7) in the communication apparatus 700. This is not specifically limited in this embodiment of this application.

The transceiver 703 is configured to communicate with another communication apparatus. For example, the communication apparatus 700 is a terminal, and the transceiver 703 may be configured to communicate with a network device or communicate with another terminal device. For another example, the communication apparatus 700 is a network device, and the transceiver 703 may be configured to communicate with a terminal or communicate with another network device.

Optionally, the transceiver 703 may include a receiver and a transmitter (not separately shown in FIG. 7). The receiver is configured to implement a receiving function, and the transmitter is configured to implement a sending function.

Optionally, the transceiver 703 may be integrated with the processor 701, or may exist independently, and is coupled to the processor 701 through an interface circuit (not shown in FIG. 7) in the communication apparatus 700. This is not specifically limited in this embodiment of this application.

It may be understood that a structure of the communication apparatus 700 shown in FIG. 7 does not constitute a limitation on the communication apparatus. An actual communication apparatus may include more or fewer parts than those shown in the figure, or combine some parts, or have different part arrangement.

In addition, for technical effects of the communication apparatus 700, refer to the technical effects of the method in the foregoing method embodiment. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by a first access network device, data of a service of a terminal to a second access network device;
receiving, by the first access network device, feedback information from the second access network device, wherein the feedback information is used to determine that first data is successfully received by the second access network device, and the first data is at least a part of the data of the service; and
sending, by the first access network device, the first data to the terminal on a first time domain resource, wherein the first time domain resource is further used by the second access network device to send the first data to the terminal.

2. The method according to claim 1, wherein the feedback information comprises a first identifier of the first data and/or a second identifier of second data that is in the data of the service and that is not successfully received by the second access network device, the second data is different from the first data, and the method further comprises:
determining, by the first access network device based on the first identifier and/or the second identifier, that the first data is successfully received by the second access network device.

3. The method according to claim 2, wherein the second identifier is a sequence number of the second data, the sequence number represents a sending order of the second data, and the determining, by the first access network device based on the second identifier, that the first data is successfully received by the second access network device comprises:
determining, by the first access network device based on the sequence number of the second data, data sent before the second data, wherein the data sent before the second data is the first data that is successfully received by the second access network device.

4. The method according to claim 2 or 3, wherein the method further comprises:
determining, by the first access network device based on the first identifier and/or the second identifier, that the second data is not successfully received by the second access network device; and
sending, by the first access network device, the second data to the terminal on a second time domain resource, wherein the second time domain resource is a time domain resource different from the first time domain resource.

5. The method according to any one of claims 1 to 4, wherein before the sending, by the first access network device, the first data to the terminal on a first time domain resource, the method further comprises:
determining, by the first access network device, that a data amount of the first data has reached a data amount threshold, wherein the data amount threshold is a data amount that triggers the first access network device and the second access network device to send data on a same time domain resource; and/or
determining, by the first access network device, that duration for which the first access network device stores the first data has reached first threshold duration, wherein the first threshold duration is duration for which the first data remains valid on the first access network device.

6. The method according to any one of claims 1 to 5, wherein before the sending, by the first access network device, the first data to the terminal on a first time domain resource, the method further comprises:
sending, by the first access network device, first indication information to the terminal, wherein the first indication information is used to trigger the terminal to measure a channel, and the channel is a channel between the first access network device and the terminal and between the second access network device and the terminal; and
receiving, by the first access network device, a channel measurement result from the terminal, wherein the channel measurement result represents a state of the channel; and
correspondingly, the sending, by the first access network device, the first data to the terminal on a first time domain resource comprises:
determining, by the first access network device based on the state of the channel, to send the first data to the terminal on the first time domain resource.

7. The method according to claim 6, wherein after the sending, by the first access network device, the first data to the terminal on a first time domain resource, the method further comprises:
sending, by the first access network device, second indication information to the terminal, wherein the second indication information indicates the terminal to suspend measuring the channel.

8. The method according to claim 6 or 7, wherein before the sending, by the first access network device, the first data to the terminal on a first time domain resource, the method further comprises:
sending, by the first access network device, third indication information to the second access network device, wherein the third indication information indicates that the second access network device needs to send a reference signal to the terminal, and the reference signal is used by the terminal to measure the channel.

9. The method according to claim 8, wherein after the sending, by the first access network device, the first data to the terminal on a first time domain resource, the method further comprises:
sending, by the first access network device, fourth indication information to the second access network device, wherein the fourth indication information indicates the second access network device to suspend sending the reference signal.

10. The method according to any one of claims 1 to 9, wherein before the sending, by the first access network device, the first data to the terminal on a first time domain resource, the method further comprises:
sending, by the first access network device, fifth indication information to the second access network device, wherein the fifth indication information is used to trigger the second access network device and the first access network device to send data on a same time domain resource.

11. The method according to claim 10, wherein after the sending, by the first access network device, the first data to the terminal on a first time domain resource, the method further comprises:
sending, by the first access network device, sixth indication information to the second access network device, wherein the sixth indication information is used to trigger the second access network device and the first access network device to suspend sending the data on the same time domain resource.

12. The method according to any one of claims 1 to 11, wherein before the sending, by a first access network device, data of a service of a terminal to a second access network device, the method further comprises:
obtaining, by the first access network device, the data of the service; and
determining, by the first access network device, that the data of the service is data that needs to be sent by the first access network device and the second access network device on a same time domain resource.

13. A communication method, wherein the method comprises:
receiving, by a second access network device, first data, wherein the first data is at least a part of data of a service of a terminal, and the data of the service is data sent by the first access network device to the second access network device;
sending, by the second access network device, feedback information to the first access network device based on the first data, wherein the feedback information is used to determine that the first data is successfully received by the second access network device; and
sending, by the second access network device, the first data to the terminal on a first time domain resource, wherein the first time domain resource is further used by the first access network device to send the first data to the terminal.

14. The method according to claim 13, wherein the feedback information comprises a first identifier of the first data and/or a second identifier of second data that is in the data of the service and that is not successfully received by the second access network device, and the second data is different from the first data.

15. The method according to claim 14, wherein a sequence number of the first data represents a sending order of the first data, and after the receiving, by a second access network device, first data, and before the sending, by the second access network device, feedback information to the first access network device, the method further comprises:
determining, by the second access network device based on the sequence number of the first data, that data that is not successfully received within transmission duration since the first data is received is the second data, wherein the transmission duration is duration allowed for data transmission between the first access network device and the second access network device.

16. The method according to any one of claims 13 to 15, wherein before the sending, by the second access network device, the first data to the terminal on a first time domain resource, the method further comprises:
determining, by the second access network device, that a data amount of the first data has reached a data amount threshold, wherein the data amount threshold is a data amount that triggers the first access network device and the second access network device to send data on a same time domain resource; and/or
determining, by the second access network device, that duration for which the second access network device stores the first data has reached second threshold duration, wherein the second threshold duration is duration for which the first data remains valid on the second access network device.

17. The method according to any one of claims 13 to 16, wherein before the sending, by the second access network device, the first data to the terminal on a first time domain resource, the method further comprises:
receiving, by the second access network device, third indication information from the first access network device, wherein the third indication information indicates that the second access network device needs to send a reference signal, the reference signal is used by the terminal to measure a channel, and the channel is a channel between the first access network device and the terminal and between the second access network device and the terminal; and
sending, by the second access network device, the reference signal based on the third indication information.

18. The method according to claim 17, wherein after the sending, by the second access network device, the first data to the terminal on a first time domain resource, the method further comprises:
receiving, by the second access network device, fourth indication information from the first access network device, wherein the fourth indication information indicates the second access network device to suspend sending the reference signal.

19. The method according to any one of claims 13 to 18, wherein before the sending, by the second access network device, the first data to the terminal on a first time domain resource, the method further comprises:
receiving, by the second access network device, fifth indication information from the first access network device, wherein the fifth indication information is used to trigger the second access network device and the first access network device to send data on a same time domain resource.

20. The method according to claim 19, wherein after the sending, by the second access network device, the first data to the terminal on a first time domain resource, the method further comprises:
receiving, by the second access network device, sixth indication information from the first access network device, wherein the sixth indication information is used to trigger the second access network device and the first access network device to suspend sending the data on the same time domain resource.

21. A communication apparatus, wherein the apparatus comprises a module configured to perform the method according to any one of claims 1 to 12.

22. A communication apparatus, wherein the apparatus comprises a module configured to perform the method according to any one of claims 13 to 20.

23. A communication system, wherein the system comprises a first access network device configured to perform the method according to any one of claims 1 to 12, and a second access network device configured to perform the method according to any one of claims 13 to 20.

24. A chip, wherein the chip comprises a processor, and the processor is configured to execute a computer program or instructions stored in a memory, to enable the chip to perform the method according to any one of claims 1 to 20.

25. A communication apparatus, wherein the communication apparatus comprises a processor and a memory, the memory is configured to store computer instructions, and when the processor executes the instructions, the communication apparatus is enabled to perform the method according to any one of claims 1 to 20.

26. A computer-readable storage medium, wherein the computer-readable storage medium comprises a computer program or instructions, and when the computer program or the instructions are run on a computer, the computer is enabled to perform the method according to any one of claims 1 to 20.
